# EUROPEAN PATENT SPECIFICATION

(11) **EP 0 964 597 B1**
(45) Date of publication and mention of the grant of the patent: **14.12.2005**
(21) Application number: 99111021.4
(22) Date of filing: 11.06.1999
(51) Int. Cl.: H04Q 7/38

(54) **Communication scheme using check packets for guaranteeing data packet order in communication media exchange**
Kommunikationsschema mit Prüfungspaketen zur Sicherstellung der Übertragungsfolge von Datenpaketen in Kommunikationsmediaaustausch
Schéma de communication avec paquets de contrôle pour garantir l'ordre de paquets de données dans l'échange de medias de transmission

(30) Priority: 12.06.1998 US 89195 P; 24.09.1998 US 160521
(43) Date of publication of application: 15.12.1999
(73) Proprietor: NIPPON TELEGRAPH AND TELEPHONE CORPORATION, Tokyo 160 (JP); NTT Multimedia Communications Laboratories Inc., Wilmington, Delaware 19805 (US)
(72) Inventor: Terao, Kazuyuki, Nippon Telegraph/Telephone Corp., Tyokyo 163-14 (JP); Ono, Satoshi, Nippon Telegraph/Telephone Corp., Tyokyo 163-14 (JP); Miyakawa, Shin, Palo Alto, CA 94306 (US)
(74) Representative: HOFFMANN EITLE

(56) References cited:
- EP-A- 0 509 548
- EP-A- 0 777 397
- CH-A- 682 867

## Description

### BACKGROUND OF THE INVENTION

### FIELD OF THE INVENTION

The present invention relates to a technique for enabling exchange of communication media to be utilized during communication smoothly without interrupting communication.

### DESCRIPTION OF THE BACKGROUND ART

Conventionally, a technique for carrying out exchange of communication media by guaranteeing an order of packets during communication has not been considered in a system in which the communication is to be continued while appropriately exchanging mutually different communication networks according to various conditions.

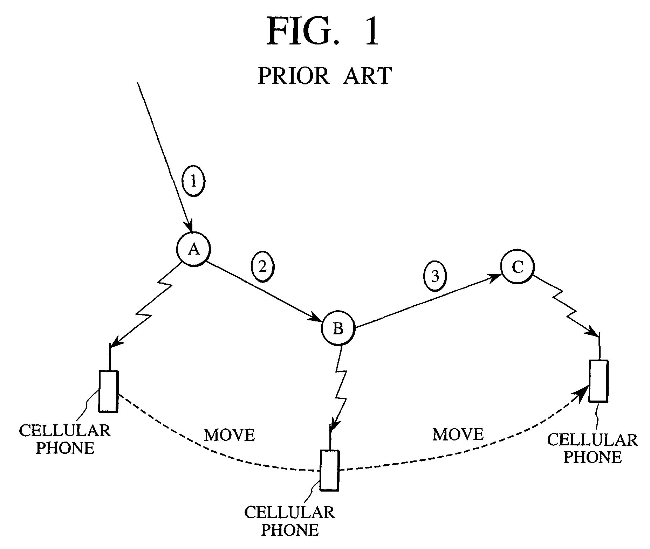

As a method for guaranteeing an order of packets in general, an example in the case of cellular phone system is shown in Fig. 1, where the closest base station changes as A, B, C in conjunction with a move of the cellular phone. Here, it is assumed that initially packets are reaching from a base station A to the cellular phone. The cellular phone moves while carrying out communication, and the closest base station is changed to B. At this point, the order of packets is guaranteed as packets are transferred from the base station A to the base station B. Moreover, in the case where the cellular phone moves and the closest base station is changed to C, the order is guaranteed as packets are successively transferred from the base station A to the base station B, and from the base station B to the base station C. This method certainly can guarantee the order of packets, but this method also causes a waste in the communication path in conjunction with a move of the cellular phone, so that this method is going to consume communication facilities wastefully.

On the other hand, as a technique capable of exchanging communication media during communication, the Mobile IP is known, but the exchange of communication media that guarantees the packet order has not been considered in the Mobile IP, and the processing of an upper layer than the IP layer is held responsible for guaranteeing the packet order in the Mobile IP.

Now, when it becomes possible to simultaneously establish two communication paths using different communication media, at a time of exchanging the communication media to be utilized during communication, it becomes necessary to guarantee the order of packets that are being exchanged and to carry out the exchange at a timing where no packets exist on communication paths between hosts that are carrying out the communication, in order to continue the communication smoothly even after the communication media to be utilized are exchanged.

### SUMMARY OF THE INVENTION

It is therefore an object of the present invention to provide a communication scheme capable of guaranteeing the order of packets to be exchanged in the communication while carrying out the exchange of communication media to be utilized at a timing where no packets exist on communication paths between communicating hosts, so as to be able to continue the communication smoothly even after the communication media to be utilized are exchanged.

According to one aspect of the present invention there is provided a method for exchanging communication media during a communication between a source host and a destination host in a communication system, the method comprising the steps of claim 1 as follows: (a) establishing a second communication path using a new communication medium to which the communication is to be exchanged between the source host and the destination host while carrying out the communication through a first communication path using an original communication medium; (b) transmitting from the source host to the destination host a first check packet through the first communication path, and stopping transmission of user data packets from the source host upon transmitting the first check packet; (c) transmitting from the destination host to the source host the first check packet through the second communication path upon receiving the first check packet through the first communication path while transmitting a second check packet through the first communication path, and stopping transmission of user data packets from the destination host upon transmitting the second check packet; (d) transmitting from the source host to the destination host the second check packet through the second communication path upon receiving the second check packet through the first communication path; (e) starting transmission of user data packets from the source host to the destination host through the second communication path upon receiving the first check packet through the second communication path; (f) starting transmission of user data packets from the destination host to the source host through the second communication path upon receiving the second check packet through the second communication path; and (g) disconnecting the first communication path between the source host and the destination host when the communication through the second communication path is started.

According to another aspect of the present invention there is provided a host device for carrying out a communication while exchanging communication media in a communication system, the host device having the features of claim 6, and comprising: a communication path management unit for establishing a second communication path using a new communication medium to which the communication is to be exchanged between the host device and a correspondent host while carrying out the communication through a first communication path using an original communication medium, and disconnecting the first communication path between the host device and the correspondent host when the communication through the second communication path is started; and a check packet processing unit for transmitting a first check packet through the first communication path to the correspondent host and stopping transmission of user data packets from the host device upon transmitting the first check packet, while transmitting a second check packet through the second communication path to the correspondent host upon receiving the second check packet through the first communication path from the correspondent host, and starting transmission of user data packets through the second communication path to the correspondent host upon receiving the first check packet through the second communication path from the correspondent host.

According to another aspect of the present invention there is provided a host device for carrying out a communication while exchanging communication media in a communication system, the host device having the features of claim 11 and comprising: a communication path management unit for establishing a second communication path using a new communication medium to which the communication is to be exchanged between the host device and a correspondent host while carrying out the communication through a first communication path using an original communication medium, and disconnecting the first communication path between the host device and the correspondent host when the communication through the second communication path is started; and a check packet processing unit for transmitting a first check packet through the second communication path to the correspondent host upon receiving the first check packet through the first communication path from the correspondent host while transmitting a second check packet through the first communication path to the correspondent host, stopping transmission of user data packets from the host device upon transmitting the second check packet, and starting transmission of user data packets through the second communication path to the correspondent host upon receiving the second check packet through the second communication path from the correspondent host.

Other features and advantages of the present invention will become apparent from the following description taken in conjunction with the accompanying drawings.

### BRIEF DESCRIPTION OF THE DRAWINGS

Fig. 1 is a schematic diagram for explaining a conventional method for guaranteeing an order of packets in a cellular phone system.
Fig. 2 is a block diagram showing an exemplary configuration of a check packet interface according to one embodiment of the present invention.
Fig. 3 is a diagram showing an exemplary format of a check packet according to one embodiment of the present invention.
Figs. 4A to 4C are sequential diagrams showing the operation using check packets in the method I according to one embodiment of the present invention.
Figs. 5A to 5D are sequential diagrams showing the operation using check packets in the method II according to one embodiment of the present invention.
Fig. 6 is a schematic diagram of an exemplary L2 integrated access system to which the communication scheme according to the present invention is applied.

### DETAILED DESCRIPTION OF THE PREFERRED EMBODIMENTS

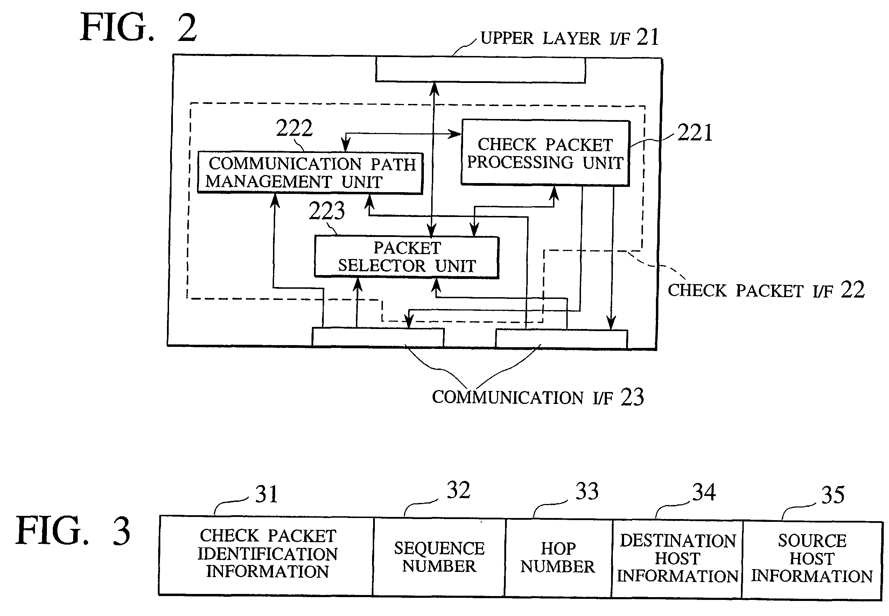

Referring now to Fig. 2 to Fig. 6, one embodiment of the communication scheme according to the present invention will be described in detail.

In short, in order to estimate a timing for exchanging communication media to be utilized during communication, the present invention introduces packets called check packets that have roles for guaranteeing the order of data packets and confirming that no packets are staying on the communication paths between communicating hosts, separately from data packets that are exchanged by users.

Then, as shown in Fig. 2, a check packet interface 22 is formed in a device having an upper layer interface 21 and a plurality of communication interfaces 23, from a check packet processing unit 221 having a function for generating or processing check packets received from a physical layer, a communication path management unit 222 for managing a currently used communication path and a new communication path to be exchanged for each correspondent, and a packet selector unit 223 capable of identifying check packets.

This check packet interface 22 is provided at a portion which is receiving user data from a communication interface, carrying out processing, and sending them to an appropriate upper level interface, and is operated in the case where the received packet is the check packet and in the case where a communication media exchange request is received from a user after a new communication path is established, for the purpose of producing the check packets.

Apart from these cases, this check packet interface 22 simply transmits packets between appropriate upper layer interface 21 and appropriate communication interface 23.

Now, the check packet generation in this check packet interface 22 will be described.

When the communication media exchange request is received from the user, a message commanding generation of check packets to be exchanged with a specified host is transmitted from the packet selector unit 223 to the check packet processing unit 221, and the check packet generation processing is carried out.

Here, the check packet to be generated has a format as shown in Fig. 3, which has information for identifying the check packet including a check packet identification information 31 for indicating that this is a check packet so that it can be distinguished from user data packets, and a sequence number 32 for uniquely identifying each check packet even when a plurality of check packets are generated. In addition, in the case of method II described below, the check packet identification information also indicates whether this check packet is a packet (called trigger packet in the following) which requests the check packet generation at a correspondent host or not.

The check packet of Fig. 3 also has a field called hop number 33 which indicates the number of times for which the check packet is to be processed at a destination host. This hop number field 33 is to be decremented by one by a host indicated as a destination of the check packet at a time of receiving, processing, and transmitting this check packet. In the case of method I described below, the hop number 33 is initially set to a value 1 for the check packet to be transmitted to a currently used communication path and a value 2 for the check packet to be transmitted to a new communication path. In the case of method II described below, the hop number 33 is initially set to a value 1 for both of these check packets.

The check packet of Fig. 3 also has a destination host information 34 for indicating a destination host of the check packet and a source host information 35 for indicating a source host of the check packet, so as to specify the communication path through which the check packet is to be exchanged. These destination host information 34 and source host information 35 are given by identifiers capable of uniquely identifying hosts.

The communication path management unit 222 is managing information as to the exchange from which communication path to which communication path should be carried out for the correspondent host, and transmits the check packets to the respective communication paths according to this information.

Next, the check packet processing at the check packet interface 22 in the host that received the check packet will be described.

A packet received through the communication interface 23 is sent to the packet selector unit 223. When the received packet is the user data, it is given to appropriate upper layer interface 21. When the received packet is the check packet, it is given to the check packet processing unit 221 where the check packet processing is carried out.

In either the method I or the method II, upon receiving the check packet, the check packet processing unit 221 first checks the hop number 33 of the check packet. Then, the subsequent processing is carried out in the method I and the method II respectively as follows.

### <Processing in Method I>

When the check packet with the hop number 33 equal to 0 is received, it implies that no user data packet is staying in the communication path that has been utilized in transmitting the user data to the correspondent host, so that the received check packet with the hop number 33 equal to 0 is not transmitted any further and discarded at the check packet processing unit 221, and the transmission of the user data to the correspondent host using a new communication path will be started.

When the check packet with the hop number 33 greater than or equal to 1 is received, it implies that the checking by the check packet operation as to whether there is any user data remaining on the communication path has not finished yet. In this case, the destination host information 34 and the source host information 35 are interchanged while the hop number 33 is decremented by one in the received packet. Then, this check packet is transmitted toward the communication interface 23 corresponding to a communication path different from that from which this check packet was just received, according to the information managed by the communication path management unit 222.

### <Processing in Method II>

When the check packet with the hop number 33 equal to 0 is received, it implies that no user data packet is staying in the communication path that has been utilized in transmitting the user data to the correspondent host, so that the received check packet with the hop number 33 equal to 0 is not transmitted any further and discarded at the check packet processing unit 221, and the transmission of the user data to the correspondent host using a new communication path will be started.

When the check packet with the hop number 33 equal to 1 is received, it implies that the checking by the check packet operation as to whether there is any user data remaining on the communication path has not finished yet. In this case, if the check packet identification information 31 indicates that this is the trigger packet, the destination host information 34 and the source host information 35 are interchanged while the hop number 33 is decremented by one in the received packet. Then, this check packet is transmitted toward the communication interface 23 corresponding to a communication path different from that from which this check packet was just received, according to the information managed by the communication path management unit 222. In addition, another check packet with the destination host information 34 and the source host information 35 interchanged from those of the trigger packet and the hop number 33 set equal to 1 is generated, and transmitted toward the communication path from which the trigger packet was just received, according to the information managed by the communication path management unit 222.

When the check packet with the hop number 33 equal to 1 is received but the check packet identification information 31 does not indicates that this is the trigger packet, the destination host information 34 and the source host information 35 are interchanged while the hop number 33 is decremented by one in the received packet. Then, this check packet is transmitted toward the communication interface 23 corresponding to a communication path different from that from which this check packet was just received, according to the information managed by the communication path management unit 222.

Next, the operation of the check packets will be described for an exemplary case where, starting from a state in which a host-1 and a host-2 are carrying out a communication using a communication path-1, the host-2 makes a request for exchange to a communication using a communication path-2, and the exchange is made by using the check packets. Here, again, the case of method I and the case of method II will be described separately.

### <Operation in Method I>

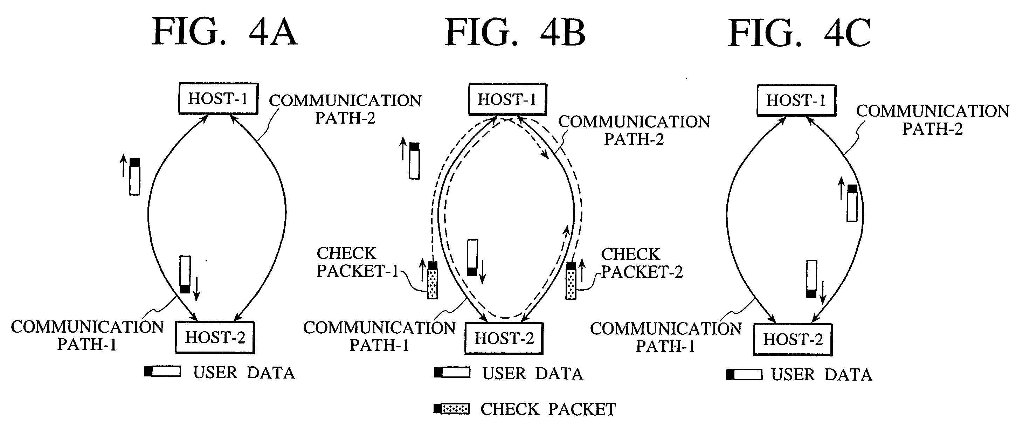

1. From a state in which the communication using the communication path-1 is carried out (Fig. 4A), the host-2 newly establishes the communication path-2 toward the host-1, and requests the exchange from the communication using the communication path-1 to the communication using the communication path-2.
2. The check packets are transmitted through the following two routes from the host-2 toward the host-1 (Fig. 4B):
   (1) Check Packet-1:
      Host-2 → (Communication Path-1) → Host-1 → (Communication Path-2) → Host-2;
   (2) Check Packet-2:
      Host-2 → (Communication Path-2) → Host-1 → (Communication Path-1) → Host-2 → (Communication Path-2) → Host-1.

   Here it is assumed that the hop number 33 of the check packet-1 is 1 and the hop number 33 of the check packet-2 is 2.
   After transmitting these check packets, the host-2 does not carry out transmission of the user data packets until the transmitted check packet-1 is received again.
3. The host-1 decrements the hop number 33 of each received check packet by one, interchanges the destination host information 34 and the source host information 35, and then transmits the received check packets toward the host-2 along the above described routes respectively. After receiving the check packet-2 and transmitting it toward the host-2, the host-1 interrupts transmission of the user data (Fig. 4B).
4. When the check packet-1 is received, the host-2 confirms that the hop number is 0 and discards the check packet-1, and transmits the user data to the host-1 by using the communication path-2 (Fig. 4C).
5. When the check packet-2 is received, the host-2 decrements the hop number by one, interchanges the destination host information 34 and the source host information 35, and then transmits it to the host-1.
6. When the check packet-2 is received, the host-1 confirms that the hop number is 0 and discards the check packet-2, and transmits the user data to the host-2 by using the communication path-2 (Fig. 4C).
7. The communication path-1 is then disconnected.

Note that the steps 4 and 6 may be interchanged depending on the communication condition.

By this operation, at a time of exchanging the communication paths, there is completely no user data packets that are staying on the communication path between hosts, and the order of packets that are being exchanged can be guaranteed.

### <Operation in Method II>

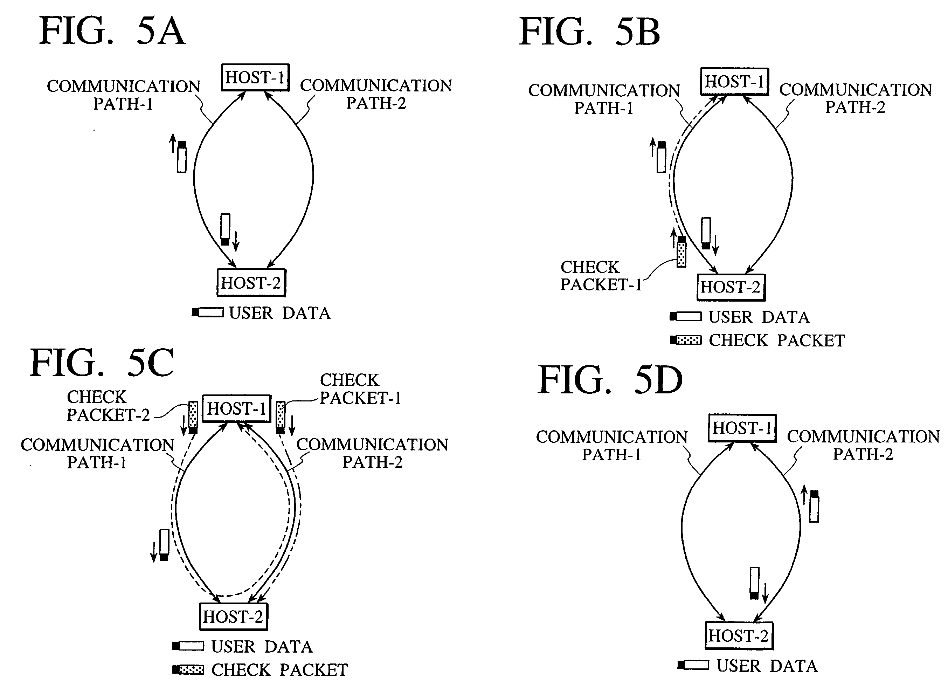

1. From a state in which the communication using the communication path-1 is carried out (Fig. 5A), the host-2 newly establishes the communication path-2 toward the host-1, and requests the exchange from the communication using the communication path-1 to the communication using the communication path-2.
2. The check packet-1 is transmitted from the host-2 toward the host-1 through the communication path-1 first (Fig. 5B). Here, the check packet identification information of the check packet-1 contains an information indicating that this is the trigger packet. After transmitting this check packet-1, the host-2 does not carry out transmission of the user data packets until the transmitted check packet-1 is received again.
3. When the check packet-1 that is the trigger packet is received from the host-2, the host-1 carries out the processing described above. Namely, the destination host information 34 and the source host information 35 are interchanged while the hop number 33 is decremented by one in the received packet, and then this check packet-1 is transmitted toward the communication path-2 different from that from which this check packet-1 was just received (Fig. 5C). Also, another check packet-2 with the destination host information 34 and the source host information 35 interchanged from those of the trigger packet and the hop number set equal to 1 is generated, and transmitted toward the communication path-1 from which the trigger packet was just received (Fig. 5C). After generating the check packet-2 and transmitting it to the host-2 through the communication path-1, the host-1 interrupts transmission of the user data.
4. When the check packet-1 is received, the host-2 transmits the user data to the host-1 by using the communication path-2 (Fig. 5D).
5. When the check packet-2 is received, the host-2 carries out the processing described above. Namely, the destination host information 34 and the source host information 35 are interchanged while the hop number 33 is decremented by one in the received packet, and then this check packet-2 is transmitted to the communication path-2 different from that from which this check packet-2 was just received (Fig. 5C).
6. When the check packet-2 is received, the host-1 transmits the user data to the host-2 by using the communication path-2 (Fig. 5D).
7. The communication path-1 is then disconnected.

Note that the steps 4 and 6 may be interchanged depending on the communication condition.

By this operation, at a time of exchanging the communication paths, there is completely no user data packets that are staying on the communication path between hosts, and the order of packets that are being exchanged can be guaranteed.

Next, an exemplary adaptation of the communication scheme of the present invention to the L2 (Layer-2) integrated access scheme which enables the exchange of communication media during communication and which is capable of simultaneously establishing two different communication paths will be described for the case of method I and the case of method II separately. Note that the L2 integrated access scheme is more fully described in the commonly assigned co-pending U.S. patent application serial No. 09/070,123 of the applicant, which is hereby incorporated by reference.

In this case, the check packet generation and processing function described above is implemented in an L2IA (L2 Integrated Access) interface which is realizing functions of the L2 integrated access scheme.

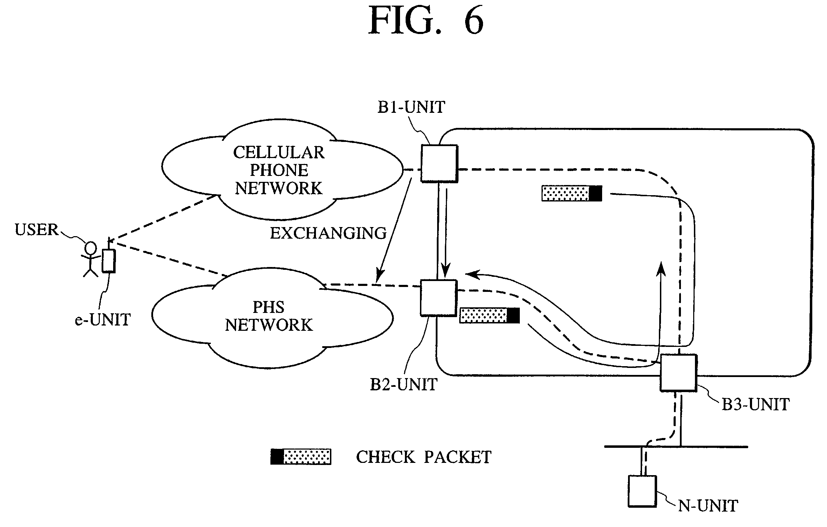

Here, as shown in Fig. 6, it is assumed that an e-unit is connected to a B1-unit by using a cellular phone and carrying out a communication with an N-unit via a B3-unit, but making a communication media exchange request so as to make a connection to a B2-unit by using a PHS (Personal Handy-phone System) and carry out the communication with the N-unit via the B3-unit.

### <Case of Method I>

(1) In a state where the communication is carried out by making a connection to the B1-unit, the exchange of communication media is requested to the B1-unit. Then, a connection to the B2-unit is newly made by using the PHS, and a communication path for transmitting the user data is established between the B3-unit and the e-unit by the functions of the L2 integrated access scheme. At this point, the B3-unit is managing information as to the exchange from which communication path to which communication path should be carried out.
(2) The e-unit transmits the check packets in two directions via the B1-unit and the B2-unit, toward the B3-unit at which the communication path is to be exchanged. Each check packet contains information on destination and source units, and the check packet transmitted via the B1-unit has the hop number set equal to 1 while the check packet transmitted via the B2-unit has the hop number set equal to 2. The hop number will be decremented by one whenever the check packet is processed at the destination unit, and the destination unit discards the received check packet with the hop number equal to 0. After transmitting these check packets, the e-unit does not carry out the transmission of the user data packets until the check packet-1 among the transmitted check packets is received again. After receiving the check packet-2, decrementing its hop number by one while interchanging its destination unit information and source unit information and transmitting it to the e-unit via the B1-unit, the B3-unit does not carry out the transmission of the user data packets until the check packet-2 is received again. The transmitted check packets pass through the following routes.
   (a) Check Packet-1
      e-unit → B1-unit → B3-unit → B2-unit → e-unit
   (b) Check Packet-2
      e-unit → B2-unit → B3-unit → B1-unit → e-unit → B2-unit → B3-unit
(3) When the check packet-1 is received, the e-unit discards this check packet-1 after checking that its hop number is equal to 0, and starts transmitting the user data to the B3-unit by using the communication path via the B2-unit.
(4) When the check packet-2 is received again, the B3-unit discards this check packet-2 after checking that its hop number is equal to 0, and transmits the user data to the e-unit by using the communication path via the B2-unit.
(5) The communication path via the B1-unit is disconnected by the functions of the L2 integrated access scheme.

### <Case of Method II>

(1) In a state where the communication is carried out by making a connection to the B1-unit, the exchange of communication media is requested to the B1-unit. Then, a connection to the B2-unit is newly made by using the PHS, and a communication path for transmitting the user data is established between the B3-unit and the e-unit by the functions of the L2 integrated access scheme. At this point, the B3-unit is managing information as to the exchange from which communication path to which communication path should be carried out.
(2) The e-unit transmits the check packet-1 with the check packet identification information indicating that this is the trigger packet via the B1-unit toward the B3-unit at which the communication path is to be exchanged. This check packet-1 has the hop number equal to 1 and contains information on destination and source units. After transmitting this check packet-1, the e-unit does not carry out the transmission of the user data packets until this check packet-1 is received again.
(3) The B3-unit receives the check packet-1 and carries out the check packet processing. Namely, the hop number is decremented by one while the destination unit information and the source unit information are interchanged, and this check packet-1 is transmitted toward the e-unit via the B2-unit. Also, after checking that the check packet-1 is the trigger packet with the hop number equal to 1, the check packet-2 with the destination unit information and the source unit information interchanged and the hop number set equal to 1 is generated and transmitted to the e-unit via the B1-unit. After transmitting this check packet-2, the B3-unit does not carry out the transmission of the user data packets until this check packet-2 is received again.
(4) When the check packet-1 is received, the e-unit discards this check packet-1 after checking that its hop number is equal to 0, and starts transmitting the user data to the B3-unit by using the communication path via the B2-unit.
(5) When the check packet-2 is received again, the B3-unit discards this check packet-2 after checking that its hop number is equal to 0, and transmits the user data to the e-unit by using the communication path via the B2-unit.
(6) The communication path via the B1-unit is disconnected by the functions of the L2 integrated access scheme.

By the above described procedures, the exchange of communication paths due to the exchange of communication media to be utilized can be realized while completely eliminating packets that are staying on the communication paths between hosts and guaranteeing the order of user data packets that are being exchanged.

As described, according to the present invention, it is possible to exchange the communication path smoothly, while securing the order of packets that are being exchanged and suppressing the loss or the like of the user data due to the exchange of communication media to be utilized.

It is to be noted that, besides those already mentioned above, many modifications and variations of the above embodiments may be made without departing from the novel and advantageous features of the present invention. Accordingly, all such modifications and variations are intended to be included within the scope of the appended claims.

## Claims

1. A method for exchanging communication media during a communication between a source host (host-2) and a destination host (host-1) in a communication system, ***characterized by*** the steps of:
(a) establishing a second communication path (path-2) using a new communication medium to which the communication is to be exchanged between the source host and the destination host while carrying out the communication through a first communication path (path-1) using an original communication medium;
(b) transmitting from the source host to the destination host a first check packet (check packet-1) through the first communication path, and stopping transmission of user data packets from the source host upon transmitting the first check packet;
(c) transmitting from the destination host to the source host the first check packet through the second communication path upon receiving the first check packet through the first communication path while transmitting a second check packet (check packet-2) through the first communication path, and stopping transmission of user data packets from the destination host upon transmitting the second check packet;
(d) transmitting from the source host to the destination host the second check packet through the second communication path (path-2) upon receiving the second check packet through the first communication path;
(e) starting transmission of user data packets from the source host to the destination host through the second communication path (path-2) upon receiving the first check packet through the second communication path;
(f) starting transmission of user data packets from the destination host to the source host through the second communication path (path-2) upon receiving the second check packet through the second communication path; and
(g) disconnecting the first communication path (path-1) between the source host and the destination host when the communication through the second communication path is started.

2. The method of claim 1, wherein the source host generates the first check packet and the second check packet, and also transmits the second check packet through the second communication path (path-2) to the destination host at the step (b), the destination host transmits the second check packet through the first communication path (path-1) to the source host upon receiving the second check packet through the second communication path at the step (c), and the source host transmits the second check packet through the second communication path (path-2) again to the destination host upon receiving the second check packet through the first communication path.

3. The method of claim 1, wherein the source host generates the first check packet at the step (b), the destination host generates the second check packet at the step (c) upon receiving the first check packet through the first communication path.

4. The method of claim 3, wherein the source host generates the first check packet containing an information (31) for requesting a generation of the second check packet to the destination host at the step (b), such that the destination host generates the second check patent at the step (c) in response to said information.

5. The method of claim 1, wherein each one of the first check packet and the second check packet contains a hop number (33), and the destination host decrements the hop number of the first check packet upon receiving the first check packet through the first communication path (path-1) before transmitting the first check packet through the second communication path (path-2) at the step (c), and the source host decrements the hop number (33) of the.second check packet upon receiving the second check packet through the first communication path (path-1) before transmitting the second check packet through the second communication path (path-2) at the step (d), such that the source host discards the first check packet at the step (e) according to the hop number of the first check packet received through the second communication path (path-2) and the destination host discards the second check packet at the step (f) according to the hop number of the second check packet received through the second communication path (path-2).

6. A host device for carrying out a communication while exchanging communication media in a communication system, the host device being ***characterized by:***
a communication path management unit (222) for establishing a second communication path (path-2) using a new communication medium to which the communication is to be exchanged between the host device and a correspondent host while carrying out the communication through a first communication path (path-1) using an original communication medium, and disconnecting the first communication path (path-1) between the host device and the correspondent host when the communication through the second communication path (path-2) is started; and
a check packet processing unit (221) for transmitting a first check packet through the first communication path (path-1) to the correspondent host and stopping transmission of user data packets from the host device upon transmitting the first check packet, while transmitting a second check packet through the second communication path (path-2) to the correspondent host upon receiving the second check packet through the first communication path (path-1) from the correspondent host, and starting transmission of user data packets through the second communication path (path-2) t the correspondent host upon receiving the first check packet through the second communication path (path-2) from the correspondent host.

7. The host device of claim 6, wherein the check packet processing unit (221) generates the first check packet and the second check packet, transmits the second check packet through the second communication path (path-2) to the correspondent host while transmitting the first check packet, and transmits the second check packet through the second communication path (path-2) again to the correspondent host upon receiving the second check packet through the first communication path from the correspondent host.

8. The host device of claim 6, wherein the check packet processing unit (221) generates the first check packet, while the correspondent host generates the second check packet upon receiving the first check packet through the first communication path (path-1).

9. The host device of claim 8, wherein the check packet processing unit (221) generates the first check packet containing an information (31) for requesting a generation of the second check packet to the correspondent host, such that the correspondent host generates the second check packet in response to said information.

10. The host device of claim 6, wherein the second check packet contains a hop number (33), and the check packet processing unit (221) decrements the hop number of the second check packet upon receiving the second check packet through the first communication path (path-1) before transmitting the second check packet through the second communication path (path-2), such that the correspondent host discards the second check packet upon receiving the second check packet through the second communication path (path-2) according to the hop number of the second check packet received through the second communication path.

11. A host device for carrying out a communication while exchanging communication media in a communication system, the host device being **characterized *by******:***
a communication path management unit (222) for establishing a second communication path (path-2) using a new communication medium to which the communication is to be exchanged between the host device and a correspondent host while carrying out the communication through a first communication path using an original communication medium, and disconnecting the first communication path (path-1) between the host device and the correspondent host when the communication through the second communication path is started; and
a check packet processing unit (221) for transmitting a first check packet through the second communication path (path-2) to the correspondent host upon receiving the first check packet through the first communication path (path-1) from the correspondent host while transmitting a second check packet through the first communication path (path-1) to the correspondent host, stopping transmission of user data packets from the host device upon transmitting the second check packet, and starting transmission of user data packets through the second communication path (path-2) to the correspondent host upon receiving the second check packet through the second communication path (path-2) from the correspondent host.

12. The host device of claim 11, wherein the check packet processing unit (221) transmits the second check packet through the first communication path (path-1) to the correspondent host upon receiving the second check packet through the second communication path (path-2) from the correspondent host.

13. The host device of claim 11, wherein the check packet processing unit (221) generates the second check packet upon receiving the first check packet through the first communication path (path-1) from the correspondent host, while the correspondent host generates the first check packet.

14. The host device of claim 13, wherein the check packet processing unit (221) generates the second check packet in response to an information (31) for requesting a generation of the second check packet to the host device which is contained in the first check packet generated by the correspondent host.

15. The host device of claim 11, wherein the first check packet contains a hop number (33), and the check packet processing unit (221) decrements the hop number of the first check packet upon receiving the first check packet through the first communication path (path-1) before transmitting the first check packet through the second communication path (path-2), such that the correspondent host discards the first check packet upon receiving the first check packet through the second communication path according to the hop number of the first check packet received through the second communication path.

## Patentansprüche

1. Ein Verfahren zum Austauschen von Kommunikationsmedien während einer Kommunikation zwischen einem Quellenhost (host-2) und einem Bestimmungshost (host-1) in einem Kommunikationssystem, **gekennzeichnet durch** die Schritte zum:
(a) Einrichten eines zweiten Kommunikationspfades (path-2), der ein neues Kommunikationsmedium verwendet, **durch** den die Kommunikation zwischen dem Quellenhost und dem Bestimmungshost ausgetauscht werden soll, während die Kommunikation **durch** einen ersten Kommunikationspfad (path-1) unter Verwenden eines ursprünglichen Kommunikationsmediums ausgeführt wird;
(b) Übermitteln eines ersten Prüfungspaketes (check packet-1) von dem Quellenhost an den Bestimmungshost **durch** den ersten Kommunikationspfad, und Stoppen einer Übermittlung von Benutzerdatenpaketen von dem Quellenhost beim Übermitteln des ersten Prüfungspaketes;
(c) Übermitteln des ersten Prüfungspaketes von dem Bestimmungshost an den Quellenhost **durch** den zweiten Kommunikationspfad beim Empfangen des ersten Prüfungspaketes **durch** den ersten Kommunikationspfad, während einem Übermitteln eines zweiten Prüfungspaketes (check packet-2) **durch** den ersten Kommunikationspfad, und Stoppen einer Übermittlung von Benutzerdatenpaketen von dem Bestimmungshost beim Übermitteln des zweiten Prüfungspaketes;
(d) Übermitteln des zweiten Prüfungspaketes von dem Quellenhost an den Bestimmungshost **durch** den zweiten Kommunikationspfad (path-2) beim Empfangen des zweiten Prüfungspaketes **durch** den ersten Kommunikationspfad;
(e) Starten einer Übermittlung von Benutzerdatenpaketen von dem Quellenhost an den Bestimmungshost **durch** den zweiten Kommunikationspfad (path-2) beim Empfangen des ersten Prüfungspaketes **durch** den zweiten Kommunikationspfad;
(f) Starten einer Übermittlung von Benutzerdatenpaketen von dem Bestimmungshost an den Quellenhost **durch** den zweiten Kommunikationspfad (path-2) beim Empfangen des zweiten Prüfungspaketes **durch** den zweiten Kommunikationspfad; und
(g) Trennen des ersten Kommunikationspfades (path-1) zwischen dem Quellenhost und dem Bestimmungshost, wenn die Kommunikation **durch** den zweiten Kommunikationspfad gestartet wird.

2. Verfahren gemäß Anspruch 1, wobei der Quellenhost das erste Prüfungspaket und das zweite Prüfungspaket erzeugt, und auch das zweite Prüfungspaket durch den zweiten Kommunikationspfad (path-2) an den Bestimmungshost in dem Schritt (b) übermittelt, der Bestimmungshost das zweite Prüfungspaket durch den ersten Kommunikationspfad (path-1) an den Quellenhost übermittelt beim Empfangen des zweiten Prüfungspaketes durch den zweiten Kommunikationspfad in dem Schritt (c), und der Quellenhost das zweite Prüfungspaket durch den zweiten Kommunikationspfad (path-2) wieder zu dem Bestimmungshost übermittelt beim Empfangen des zweiten Prüfungspaketes durch den ersten Kommunikationspfad.

3. Verfahren gemäß Anspruch 1, wobei der Quellenhost das erste Prüfungspaket in dem Schritt (b) erzeugt, der Bestimmungshost das zweite Prüfungspaket in dem Schritt (c) erzeugt beim Empfangen des ersten Prüfungspaketes durch den ersten Kommunikationspfad.

4. Verfahren gemäß Anspruch 3, wobei der Quellenhost das erste Prüfungspaket erzeugt, das eine Information (31) zum Anfragen einer Erzeugung des zweiten Prüfungspaketes enthält, an den Bestimmungshost in dem Schritt (b), derart, dass der Bestimmungshost das zweite Prüfungspaket in dem Schritt (c) in Antwort auf die Information erzeugt.

5. Verfahren gemäß Anspruch 1, wobei jedes von dem ersten Prüfungspaket und dem zweiten Prüfungspaket eine Sprungnummer (33) enthält, und der Bestimmungshost die Sprungnummer des ersten Prüfungspaketes vermindert beim Empfangen des ersten Prüfungspaketes durch den ersten Kommunikationspfad (path-1) vor Übermitteln des ersten Prüfungspaketes durch den zweiten Kommunikationspfad (path-2) in dem Schritt (c), und der Quellenhost die Sprungnummer (33) des zweiten Prüfungspaketes vermindert beim Empfangen des zweiten Prüfungspaketes durch den ersten Kommunikationspfad (path-1) vor Übermitteln des zweiten Prüfungspaketes durch den zweiten Kommunikationspfad (path-2) in dem Schritt (d), derart, dass der Quellenhost das erste Prüfungspaket in dem Schritt (e) gemäß der Sprungnummer des ersten Prüfungspaketes, das durch den zweiten Kommunikationspfad (path-2) empfangen wurde, verwirft, und der Bestimmungshost das zweite Prüfungspaket in dem Schritt (f) gemäß der Sprungnummer des zweiten Prüfungspaketes, das durch den zweiten Kommunikationspfad (path-2) empfangen wurde, verwirft.

6. Eine Hostvorrichtung zum Ausführen einer Kommunikation während einem Austauschen von Kommunikationsmedien in einem Kommunikationssystem, wobei die Hostvorrichtung **gekennzeichnet ist durch**:
eine Kommunikationspfadverwaltungseinheit (222) zum Einrichten eines zweiten Kommunikationspfades (path-2) unter Verwenden eines neuen Kommunikationsmediums, an das die Kommunikation zwischen der Hostvorrichtung und einem Korrespondenzhost ausgetauscht werden soll, während die Kommunikation **durch** einen ersten Kommunikationspfad (path-1) ausgeführt wird unter Verwenden eines ursprünglichen Kommunikationsmediums, und Trennen des ersten Kommunikationspfades (path-1) zwischen der Hostvorrichtung und dem Korrespondenzhost, wenn die Kommunikation **durch** den zweiten Kommunikationspfad (path-2) gestartet wird; und
eine Prüfungspaketverarbeitungseinheit (221) zum Übermitteln eines ersten Prüfungspaketes **durch** den ersten Kommunikationspfad (path-1) an den Korrespondenzhost und Stoppen einer Übermittlung von Benutzerdatenpaketen von der Hostvorrichtung beim Übermitteln des ersten Prüfungspaketes, während einem Übermitteln eines zweiten Prüfungspaketes **durch** den zweiten Kommunikationspfad (path-2) an den Korrespondenzhost beim Empfangen des zweiten Prüfungspaketes **durch** den ersten Kommunikationspfad (path-1) von dem Korrespondenzhost, und Starten einer Übermittlung von Benutzerdatenpaketen **durch** den zweiten Kommunikationspfad (path-2) an den Korrespondenzhost beim Empfangen des ersten Prüfungspaketes **durch** den zweiten Kommunikationspfad (path-2) von dem Korrespondenzhost.

7. Hostvorrichtung gemäß Anspruch 6, wobei die Prüfungspaketverarbeitungseinheit (221) das erste Prüfungspaket und das zweite Prüfungspaket erzeugt, das zweite Prüfungspaket durch den zweiten Kommunikationspfad (path-2) an den Korrespondenzhost übermittelt, während einem Übermitteln des ersten Prüfungspaketes, und das zweite Prüfungspaket durch den zweiten Kommunikationspfad (path-2) wieder zu dem Korrespondenzhost übermittelt beim Empfangen des zweiten Prüfungspaketes durch den ersten Kommunikationspfad von dem Korrespondenzhost.

8. Hostvorrichtung gemäß Anspruch 6, wobei die Prüfungspaketverarbeitungseinheit (221) das erste Prüfungspaket erzeugt, während der Korrespondenzhost das zweite Prüfungspaket erzeugt beim Empfangen des ersten Prüfungspaketes durch den ersten Kommunikationspfad (path-1).

9. Hostvorrichtung gemäß Anspruch 8, wobei die Prüfungspaketverarbeitungseinheit (221) das erste Prüfungspaket erzeugt, das eine Information (31) zum Anfragen eines Erzeugens des zweiten Prüfungspaketes an den Korrespondenzhost enthält, derart, dass der Korrespondenzhost das zweite Prüfungspaket in Antwort auf die Information erzeugt.

10. Hostvorrichtung gemäß Anspruch 6, wobei das zweite Prüfungspaket eine Sprungnummer (33) enthält, und die Prüfungspaketverarbeitungseinheit (221) die Sprungnummer des zweiten Prüfungspaketes beim Empfangen des zweiten Prüfungspaketes durch den ersten Kommunikationspfad (path-1) vermindert vor einem Übermitteln des zweiten Prüfungspaketes durch den zweiten Kommunikationspfad (path-2), derart, dass der Korrespondenzhost das zweite Prüfungspaket beim Empfangen des zweiten Prüfungspaketes durch den zweiten Kommunikationspfad (path-2) fallen lässt gemäß der Sprungnummer des zweiten Prüfungspaketes, das durch den zweiten Kommunikationspfad empfangen wird.

11. Hostvorrichtung zum Ausführen einer Kommunikation während einem Austauschen von Kommunikationsmedien in einem Kommunikationssystem, wobei die Hostvorrichtung **gekennzeichnet ist durch**:
eine Kommunikationspfadverwaltungseinheit (222) zum Einrichten eines zweiten Kommunikationspfades (path-2) unter Verwenden eines neuen Kommunikationsmediums, an den die Kommunikation zwischen der Hostvorrichtung und einem Korrespondenzhost ausgetauscht werden soll, während einem Ausführen der Kommunikation **durch** einen ersten Kommunikationspfad unter Verwenden eines ursprünglichen Kommunikationsmediums, und Trennen des ersten Kommunikationspfades (path-1) zwischen der Hostvorrichtung und dem Korrespondenzhost, wenn die Kommunikation **durch** den zweiten Kommunikationspfad (path-2) gestartet ist; und
eine Prüfungspaketverarbeitungseinheit (221) zum Übermitteln eines ersten Prüfungspaketes **durch** den zweiten Kommunikationspfad (path-2) an den Korrespondenzhost beim Empfangen des ersten Prüfungspaketes **durch** den ersten Kommunikationspfad (path-1) von dem Korrespondenzhost, während einem Übermitteln eines zweiten Prüfungspaketes **durch** den ersten Kommunikationspfad (path-1) an den Korrespondenzhost, Anhalten einer Übermittlung von Benutzerdatenpaketen von der Hostvorrichtung beim Übermitteln des zweiten Prüfungspaketes, und Starten einer Übermittlung von Benutzerdatenpaketen **durch** den zweiten Kommunikationspfad (path-2) an den Korrespondenzhost beim Empfangen des zweiten Prüfungspaketes **durch** den zweiten Kommunikationspfad (path-2) von dem Korrespondenzhost.

12. Hostvorrichtung gemäß Anspruch 11, wobei die Prüfungspaketverarbeitungseinheit (221) das zweite Prüfungspaket durch den ersten Kommunikationspfad (path1) an den Korrespondenzhost übermittelt beim Empfangen des zweiten Prüfungspaketes durch den zweiten Kommunikationspfad (path-2) von dem Korrespondenzhost.

13. Hostvorrichtung gemäß Anspruch 11, wobei die Prüfungspaketverarbeitungseinheit (221) das zweite Prüfungspaket beim Empfangen des ersten Prüfungspaketes durch den ersten Kommunikationspfad (path-1) von dem Korrespondenzhost erzeugt, während der Korrespondenzhost das erste Prüfungspaket erzeugt.

14. Hostvorrichtung gemäß Anspruch 13, wobei die Prüfungspaketverarbeitungseinheit (221) das zweite Prüfungspaket in Antwort auf eine Information (31) zum Anfragen eines Erzeugens des zweiten Prüfungspaketes an die Hostvorrichtung erzeugt, die in dem ersten Paket enthalten ist, das durch den Korrespondenzhost erzeugt wird.

15. Hostvorrichtung gemäß Anspruch 11, wobei das erste Prüfungspaket eine Sprungnummer (33) enthält, und die Prüfungspaketverarbeitungseinheit (221) die Sprungnummer des ersten Prüfungspaketes vermindert beim Empfangen des ersten Prüfungspaketes durch den ersten Kommunikationspfad (path-1) vor einem Übermitteln des ersten Prüfungspaketes durch den zweiten Kommunikationspfad (path-2), derart, dass der Korrespondenzhost das erste Prüfungspaket beim Empfangen des ersten Prüfungspaketes durch den zweiten Kommunikationspfad gemäß der Sprungnummer des ersten Prüfungspaketes, das durch den zweiten Kommunikationspfad empfangen wurde, verwirft.

## Revendications

1. Procédé pour échanger des supports de communication pendant une communication entre un hôte source (hôte-2) et un hôte de destination (hôte-1) dans un système de communication, ***caractérisé par*** les étapes consistant à :
(a) établir un second trajet de communication (trajet-2) en utilisant un nouveau support de communication pour lequel la communication doit être échangée entre l'hôte source et l'hôte de destination tout en effectuant la communication à travers un premier trajet de communication (trajet-1) en utilisant un support de communication d'origine ;
(b) transmettre de l'hôte source à l'hôte de destination un premier paquet de contrôle (paquet de contrôle-1) à travers le premier trajet de communication, et arrêter la transmission des paquets de données utilisateur depuis l'hôte source sur transmission du premier paquet de contrôle ;
(c) transmettre de l'hôte de destination à l'hôte source le premier paquet de contrôle à travers le second trajet de communication sur réception du premier paquet de contrôle à travers le premier trajet de communication tout en transmettant un second paquet de contrôle (paquet de contrôle-2) à travers le premier trajet de communication, et arrêter la transmission de paquets de données utilisateur depuis l'hôte de destination sur transmission du second paquet de contrôle ;
(d) transmettre de l'hôte source à l'hôte de destination le second paquet de contrôle à travers le second trajet de communication (trajet-2) sur réception du second paquet de contrôle à travers le premier trajet de communication ;
(e) commencer la transmission des paquets de données utilisateur de l'hôte source à l'hôte de destination à travers le second trajet de communication (trajet-2) sur réception du premier paquet de contrôle à travers le second trajet de communication ;
(f) commencer la transmission des paquets de données utilisateur de l'hôte de destination à l'hôte source à travers le second trajet de communication (trajet-2) sur réception du second paquet de contrôle à travers le second trajet de communication ; et
(g) déconnecter le premier trajet de communication (trajet-1) entre l'hôte source et l'hôte de destination lorsque la communication à travers le second trajet de communication est commencée.

2. Procédé selon la revendication 1, dans lequel l'hôte source génère le premier paquet de contrôle et le second paquet de contrôle et transmet également le second paquet de contrôle à travers le second trajet de communication (trajet-2) à l'hôte de destination à l'étape (b), l'hôte de destination transmet le second paquet de contrôle à travers le premier trajet de communication (trajet-1) à l'hôte source sur réception du second paquet de contrôle à travers le second trajet de communication à l'étape (c), et l'hôte source transmet le second paquet de contrôle à travers le second trajet de communication (trajet-2) de nouveau à l'hôte de destination sur réception du second paquet de contrôle à travers le premier trajet de communication.

3. Procédé selon la revendication 1, dans lequel l'hôte source génère le premier paquet de contrôle à l'étape (b), l'hôte de destination génère le second paquet de contrôle à l'étape (c) sur réception du premier paquet de contrôle à travers le premier trajet de communication.

4. Procédé selon la revendication 3, dans lequel l'hôte source génère le premier paquet de contrôle contenant une information (31) pour demander une génération du second paquet de contrôle à l'hôte de destination à l'étape (b), de sorte que l'hôte de destination génère le second paquet de contrôle à l'étape (c) en réponse à ladite information.

5. Procédé selon la revendication 1, dans lequel chacun du premier paquet de contrôle et du second paquet de contrôle contient un nombre de sauts (33), et l'hôte de destination décrémente le nombre de sauts du premier paquet de contrôle sur réception du premier paquet de contrôle à travers le premier trajet de communication (trajet-1) avant de transmettre le premier paquet de contrôle à travers le second trajet de communication (trajet-2) à l'étape (c), et l'hôte source décrémente le nombre de sauts (33) du second paquet de contrôle sur réception du second paquet de contrôle à travers le premier trajet de communication (trajet-1) avant de transmettre le second paquet de contrôle à travers le second trajet de communication (trajet-2) à l'étape (d), de sorte que l'hôte source rejette le premier paquet de contrôle à l'étape (e) en conformité avec le nombre de sauts du premier paquet de contrôle reçu à travers le second trajet de communication (trajet-2) et l'hôte de destination rejette le second paquet de contrôle à l'étape (f) en conformité avec le nombre de sauts du second paquet de contrôle reçu à travers le second trajet de communication (trajet-2).

6. Dispositif hôte pour effectuer une communication tout en échangeant des supports de communication dans un système de communication, le dispositif hôte étant ***caractérisé par** :*
une unité de gestion de trajet de communication (222) pour établir un second trajet de communication (trajet-2) en utilisant un nouveau support de communication pour lequel la communication doit être échangée entre le dispositif hôte et l'hôte correspondant tout en effectuant la communication à travers un premier trajet de communication (trajet-1) en utilisant un support de communication d'origine, et déconnectant le premier trajet de communication (trajet-1) entre le dispositif hôte et l'hôte correspondant lorsque la communication à travers le second trajet de communication (trajet-2) est commencée ; et
une unité de traitement de paquet de contrôle (221) pour transmettre un premier paquet de contrôle à travers le premier trajet de communication (trajet-1) à l'hôte correspondant et pour arrêter la transmission des paquets de données utilisateur depuis le dispositif hôte sur transmission du premier paquet de contrôle, tout en transmettant un second paquet de contrôle à travers le second trajet de communication (trajet-2) vers l'hôte correspondant sur réception du second paquet de contrôle à travers le premier trajet de communication (trajet-1) depuis l'hôte correspondant, et commencer la transmission des paquets de données utilisateur à travers le second trajet de communication (trajet-2) à l'hôte correspondant sur réception du premier paquet de contrôle à travers le second trajet de communication (trajet-2) depuis l'hôte correspondant.

7. Dispositif hôte selon la revendication 6, dans lequel l'unité de traitement de paquet de contrôle (221) génère le premier paquet de contrôle et le second paquet de contrôle, transmet le second paquet de contrôle à travers le second trajet de communication (trajet-2) à l'hôte correspondant tout en transmettant le premier paquet de contrôle et transmet le second paquet de contrôle à travers le second trajet de communication (trajet-2) de nouveau à l'hôte correspondant sur réception du second paquet de contrôle à travers le premier trajet de communication depuis l'hôte correspondant.

8. Dispositif hôte selon la revendication 6, dans lequel l'unité de traitement de paquet de contrôle (221) génère le premier paquet de contrôle, tandis que l'hôte correspondant génère le second paquet de contrôle sur réception du premier paquet de contrôle à travers le premier trajet de communication (trajet-1).

9. Dispositif hôte selon la revendication 8, dans lequel l'unité de traitement de paquet de contrôle (221) génère le premier paquet de contrôle contenant une information (31) pour demander une génération du second paquet de contrôle à l'hôte correspondant, de sorte que l'hôte correspondant génère le second paquet de contrôle en réponse à ladite information.

10. Dispositif hôte selon la revendication 6, dans lequel le second paquet de contrôle contient un nombre de sauts (33), et l'unité de traitement de paquet de contrôle (221) décrémente le nombre de sauts du second paquet de contrôle sur réception du second paquet de contrôle à travers le premier trajet de communication (trajet-1) avant la transmission du second paquet de contrôle à travers le second trajet de communication (trajet-2), de sorte que l'hôte correspondant rejette le second paquet de contrôle sur réception du second paquet de contrôle à travers le second trajet de communication (trajet-2) en conformité avec le nombre de sauts du second paquet de contrôle reçus à travers le second trajet de communication.

11. Dispositif hôte pour effectuer une communication tout en échangeant des supports de communication dans le système de communication, le dispositif hôte étant ***caractérisé par:***
une unité de gestion de trajet de communication (222) pour établir un second trajet de communication (trajet-2) en utilisant un nouveau support de communication sur lequel la communication doit être échangée entre le dispositif hôte et l'hôte correspondant tout en effectuant la communication à travers un premier trajet de communication en utilisant un support de communication d'origine, et déconnectant le premier trajet de communication (trajet-1) entre le dispositif hôte et l'hôte correspondant lorsque la communication à travers le second trajet de communication est commencée ; et
une unité de traitement de paquet de contrôle (221) pour transmettre un premier paquet de contrôle à travers le second trajet de communication (trajet-2) à l'hôte correspondant sur réception du premier paquet de contrôle à travers le premier trajet de communication (trajet-1) de l'hôte correspondant tout en transmettant un second paquet de contrôle à travers le premier trajet de communication (trajet-1) à l'hôte correspondant, arrêtant la transmission des paquets de données utilisateur depuis le dispositif hôte sur transmission du second paquet de contrôle et commençant la transmission des paquets de données utilisateur à travers le second trajet de communication (trajet-2) à l'hôte correspondant sur réception du second paquet de contrôle à travers le second trajet de communication (trajet-2) depuis l'hôte correspondant.

12. Dispositif hôte selon la revendication 11, dans lequel l'unité de traitement de paquet de contrôle (221) transmet le second paquet de contrôle à travers le premier trajet de communication (trajet-1) à l'hôte correspondant sur réception du second paquet de contrôle à travers le second trajet de communication (trajet-2) depuis l'hôte correspondant.

13. Dispositif hôte selon la revendication 11, dans lequel l'unité de traitement de paquet de contrôle (221) génère le second paquet de contrôle sur réception du premier paquet de contrôle à travers le premier trajet de communication (trajet-1) depuis l'hôte correspondant, tandis que l'hôte correspondant génère le premier paquet de contrôle.

14. Dispositif hôte selon la revendication 13, dans lequel l'unité de traitement de paquet de contrôle (221) génère le second paquet de contrôle en réponse à une information (31) pour demander une génération du second paquet de contrôle au dispositif hôte qui est contenu dans le premier paquet de contrôle généré par l'hôte correspondant.

15. Dispositif hôte selon la revendication 11, dans lequel le premier paquet de contrôle contient un nombre de sauts (33), et l'unité de traitement de paquet de contrôle (221) décrémente le nombre de sauts du premier paquet de contrôle sur réception du premier paquet de contrôle à travers le premier trajet de communication (trajet-1) avant de transmettre le premier paquet de contrôle à travers le second trajet de communication (trajet-2), de sorte que l'hôte correspondant rejette le premier paquet de contrôle sur réception du premier paquet de contrôle à travers le second trajet de communication en conformité avec le nombre de sauts du premier paquet de contrôle reçu à travers le second trajet de communication.
